# EUROPÄISCHE PATENTSCHRIFT

(11) **EP 3 679 246 B1**
(45) Veröffentlichungstag und Bekanntmachung des Hinweises auf die Patenterteilung: **17.02.2021**
(21) Anmeldenummer: 18756204.6
(22) Anmeldetag: 15.08.2018
(51) Int. Cl.: F03D 17/00, F03D 80/70

(54) **VERFAHREN ZUM ÜBERWACHEN DES ZUSTANDS MINDESTENS EINES WÄHREND DES BETRIEBS EINER WINDKRAFTANLAGE BELASTETEN BAUTEILS**
METHOD FOR MONITORING THE STATE OF AT LEAST ONE COMPONENT WHICH IS LOADED DURING THE OPERATION OF A WIND TURBINE
PROCÉDÉ DE SURVEILLANCE DE L'ÉTAT D'AU MOINS UN COMPOSANT SOLLICITÉ PENDANT LE FONCTIONNEMENT D'UNE ÉOLIENNE

(30) Priorität: 04.09.2017 DE 102017120284
(43) Veröffentlichungstag der Anmeldung: 15.07.2020
(73) Patentinhaber: RWE Renewables GmbH, 45145 Essen (DE)
(72) Erfinder: HEINDL, Stefan, 45147 Essen (DE)
(74) Vertreter: Cohausz & Florack
(86) Internationale Anmeldenummer: PCT/EP2018/072105
(87) Internationale Veröffentlichungsnummer: WO 2019/042773

(56) Entgegenhaltungen:
- EP-A1- 2 927 662
- EP-A2- 1 650 431
- DE-A1-102011 052 894

## Beschreibung

Die Anmeldung betrifft ein Verfahren zum Überwachen des Zustands mindestens eines während des Betriebs einer Windkraftanlage belasteten Bauteils der Windkraftanlage, umfassend Erfassen einer ersten Temperatur eines ersten belasteten Bauteils der Windkraftanlage. Darüber hinaus betrifft die Anmeldung ein Überwachungssystem,

Ein stetiges Anliegen bei einer Windkraftanlage, insbesondere bei einer Offshore-Windkraftanlage, ist die Überwachung der belasteten Komponenten bzw. Bauteile der Windkraftanlage, Unter einem belasteten Bauteil ist insbesondere ein Bauteil einer Windkraftanlage zu verstehen, welches während des Betriebs der Windkraftanlage Belastungen ausgesetzt ist. Mit anderen Worten wirken in diesem Fall Kräfte auf das Bauteil, welche eine Beschädigung des Bauteils verursachen können.

Um eine Beschädigung insbesondere in einem frühen Stadium zu detektieren, ist es aus dem Stand der Technik EP 2 927 662 A1 bekannt, eine Temperaturüberwachung eines belasteten Bauteils, beispielsweise ein Wälzlager einer Windkraftanlage, zu installieren. Insbesondere wird gemäß dem Stand der Technik vorgeschlagen, die Temperatur des belasteten Bauteils und die Umgebungstemperatur zu erfassen. Durch Normalisierung der Temperatur des Bauteils mit der Umgebungstemperatur wird ein entsprechender Temperaturtrend aussagekräftiger.

In der Praxis hat sich das Verfahren jedoch als nicht ausreichend zuverlässig erwiesen. So führte dieses Verfahren insbesondere abhängig vom Messpunkt der Umgebungstemperatur und/oder der Bauart der Windkraftanlage samt der entsprechenden Bauteile, insbesondere Lager, nicht immer zu der erwünschten Klarheit der Ergebnisse. Vielmehr blieben mögliche Temperaturtrends versteckt in den Unsicherheiten und Beschädigungen eines Bauteils wurden erst in einem späten Stadium oder gar nicht entdeckt.

Da es bisher nicht gelang, aus der Temperaturmessung eines belasteten Bauteils zuverlässige und signifikante Ergebnisse abzuleiten, werden in der Praxis Windkraftanlagen zusätzlich mit einem so genannten Condition Monitoring System (CMS) ausgerüstet. Ein CMS ist eingerichtet, Schwingungen und Vibrationen der Windkraftanlage zu überwachen, um frühzeitig Veränderungen und Zustandsverschlechterungen zu erkennen. Die Anschaffung, Installierung und der Betrieb eines derartigen Systems ist jedoch mit einem hohen Aufwand und entsprechenden Kosten verbunden.

Daher liegt der Anmeldung die Aufgabe zugrunde, ein Verfahren zum Überwachen des Zustands mindestens eines während des Betriebs einer Windkraftanlage belasteten Bauteils der Windkraftanlage bereitzustellen, welches in zuverlässiger Weise und mit geringen Aufwand eine Erkennung einer Beschädigung eines belasteten Bauteils insbesondere in einem frühen Stadium ermöglicht.

Die Aufgabe wird gemäß einem ersten Aspekt der Anmeldung durch ein Verfahren zum Überwachen des Zustands mindestens eines während des Betriebs einer Windkraftanlage belasteten Bauteils der Windkraftanlage gemäß dem Anspruch 1 gelöst. Das Verfahren umfasst das Erfassen einer ersten Temperatur eines ersten belasteten Bauteils der Windkraftanlage. Das Verfahren umfasst:
- Erfassen mindestens einer weiteren Temperatur eines weiteren belasteten Bauteils der Windkraftanlage,
- wobei das erste belastete Bauteil und das weitere belastete Bauteil eine thermische Kopplung miteinander aufweisen, und
- Detektieren einer Beschädigung von mindestens einem der belasteten Bauteile basierend auf der erfassten ersten Temperatur und der erfassten weiteren Temperatur und mindestens einem Zulässigkeitskriterium in einem Auswerteschritt.

Indem im Gegensatz zum Stand der Technik anmeldungsgemäß die jeweilige Temperatur von zwei belasteten Bauteilen erfasst wird, die eine thermische Kopplung miteinander haben, und diese Temperaturdaten für die Detektierung einer möglichen Beschädigung von mindestens einem der Bauteile ausgewertet werden, wird in zuverlässiger Weise und mit geringen Aufwand eine Beschädigung eines belasteten Bauteils in einem frühen Stadium erkannt. Zusätzliche Überwachungssysteme, wie CMS, können entfallen.

Eine Windkraftanlage, beispielsweise eine Offshore-Windkraftanlage, ist allgemein dazu eingerichtet, die kinetische Energie des Windes mittels eines Rotors und eines Generators in elektrische Energie zu wandeln. Eine anmeldungsgemäße Windkraftanlage verfügt über eine Vielzahl von während des Betriebs belasteten Bauteilen. Unter einem belasteten Bauteil ist anmeldungsgemäß ein Bauteil bzw. eine Komponente zu verstehen, auf die während des Betriebs eine Belastung bzw. eine Kraft ausgeübt wird.

Anmeldungsgemäß ist vorgesehen, dass eine Temperaturüberwachung von mindestens zwei, vorzugsweise genau zwei, belasteten Bauteilen durchgeführt wird. Die belasteten Bauteile haben hierbei eine thermische Kopplung miteinander. Unter einer thermischen Kopplung ist vorliegend zu verstehen, dass das erste und das weitere Bauteil ein zumindest ähnliches Temperaturverhalten und zumindest ähnliche Umgebungsbedingen haben. Insbesondere liegt eine thermische Kopplung anmeldungsgemäß vor, wenn das erste und das zweite Bauteil eine zumindest ähnliche (mechanische und/oder elektrische) Belastung erfahren und beispielsweise ähnliche Umgebungsbedingungen haben (z.B. im gleichen Gehäuse angeordnet sind oder dergleichen). Vorzugsweise kann anmeldungsgemäß stets ein Bauteilpaar bestehend aus zwei thermisch gekoppelten Bauteilen überwacht werden.

Beispielsweise kann eine Temperaturerfassungseinrichtung in der Windkraftanlage vorgesehen sein, um die erste Temperatur des ersten belasteten Bauteils und/oder die weitere Temperatur des weiteren belasteten Bauteils zu erfassen.

Es ist erkannt worden, dass insbesondere die erfassten Temperaturdaten von zwei thermisch gekoppelten Bauteilen, die insbesondere eine zumindest ähnliche, vorzugsweise gleiche, Belastung erfahren, gute Indikatoren für eine Beschädigung von mindestens einem der überwachten Bauteile ist.

Insbesondere ist anmeldungsgemäß in einem Auswerteschritt vorgesehen, eine Beschädigung von mindestens einem der belasteten Bauteile basierend auf der ersten Temperatur und der weiteren Temperatur und mindestens einem Zulässigkeitskriterium zu detektieren. Anmeldungsgemäß ist hierbei unter einer Beschädigung auch eine mögliche (zukünftige) Beschädigung des Bauteils bzw. eine Beschädigung in einem frühen Stadium zu verstehen. Beispielsweise kann in dem Auswerteschritt eine Vergleichsoperation der erfassten ersten und weiteren Temperaturdaten miteinander und/oder mit einem Zulässigkeitskriterium (z.B. ein zulässiger Temperaturbereich und/oder mindestens ein zulässiger Temperaturgrenzwert) durchgeführt werden. Ein Verfahren zur frühzeitigen und insbesondere zuverlässigen Identifizierung von beschädigten Bauteilen wird anmeldungsgemäß zur Verfügung gestellt.

Gemäß einer ersten Ausführungsform des anmeldungsgemäßen Verfahrens kann das Verfahren umfassen:
- Bestimmen einer differentiellen Temperatur durch Bilden der Differenz zwischen der erfassten ersten Temperatur und der erfassten weiteren Temperatur,
- wobei in dem Auswerteschritt eine Beschädigung von mindestens einem der belasteten Bauteile basierend auf der gebildeten differentiellen Temperatur und dem mindestens einen Zulässigkeitskriterium detektiert wird.

Insbesondere ist anmeldungsgemäß erkannt worden, dass eine differentielle Temperatur von zumindest ähnlich belasteten Bauteilen ein besonders guter Indikator für eine frühzeitige Erkennung von Beschädigungen darstellt. Durch die Differenzbildung werden die Temperaturdaten insbesondere miteinander derart abgeglichen, dass (nahezu) nur noch der Einfluss aus der Belastung der jeweiligen Bauteile übrigbleibt. Im fehlerfreien Betrieb der belasteten Bauteilen führt dies insbesondere dazu - aufgrund der zumindest ähnlichen Belastung dieser Bauteile -, dass als differentielle Temperatur ein bestimmtes Temperaturniveau (im Idealfall beispielsweise ca. 0°C) vorliegt. Für den Fall, dass eines der Bauteile eine Beschädigung aufweist, ändert sich die erfasste Temperatur von diesem Bauteil (insbesondere erhöht sich die Temperatur) und damit die differentielle Temperatur bzw. das bestimmte Temperaturniveau. Insbesondere kann als Zulässigkeitskriterium das bestimmte (z.B. ideale) Temperaturniveau (ggf. mit einem Toleranzbereich) verwendet werden. In besonders zuverlässiger Weise kann eine Beschädigung detektiert werden.

Gemäß einer weiteren Ausführungsform des Verfahrens kann bei Detektierung einer Beschädigung eine Alarmnachricht generiert und vorzugsweise eine Aussendung an mindestens ein Endgerät bewirkt werden. Alternativ oder zusätzlich können (automatisch) Maßnahmen ergriffen werden, um zumindest eine weitere Beschädigung zu verhindern. Beispielsweise können bei einer (frühzeitigen) Erkennung einer Beschädigung (bzw. dem Empfang der Alarmnachricht) operative Maßnahmen eingeleitet (z.B. verstärktes Nachfetten, engmaschige Überwachung, und/oder Austausch eines in einem Bauteil (z.B. Lager) eingebrachten Fettes) und/oder bei einer weitergehender Beschädigung rechtzeitig ein Austausch oder eine Reparatur des beschädigten Bauteils eingeplant werden. Hierdurch können zumindest längere Betriebsausfälle der Windkraftanlage vermieden werden.

Vorzugsweise kann das mindestens eine Zulässigkeitskriterium mindestens eine Referenztemperatur, insbesondere mindestens eine differentielle Referenztemperatur, von mindestens einer (fehlerfrei arbeiteten) Referenzwindkraftanlage umfassen. Beispielsweise kann mindestens eine Mehrzahl von Windkraftanlagen eines Windengenergiesystems (oder unterschiedlicher Windenergiesysteme) entsprechend den vorherigen Ausführungen überwacht werden. Beispielsweise können ein erstes Bauteil und ein weiteres Bauteil einer ersten Windkraftanlage und das (im Wesentlichen) gleiche erste Bauteil und das (im Wesentlichen) gleiche weitere Bauteil einer weiteren Windkraftanlage (gemäß Anspruch 1) überwacht werden. Insbesondere kann eine Vielzahl von Windkraftanlagen entsprechend überwacht werden. Als Zulässigkeitskriterium können die erste und die weitere Temperatur, insbesondere die aus diesen Temperaturdaten resultierende differentielle Temperatur, als Referenztemperatur bzw. differentielle Referenztemperatur von der mindestens einen weiteren (fehlerfrei arbeiteten) Windkraftanlage verwendet werden.

In dem Auswerteschritt kann in einem Vergleichsschritt insbesondere die erfasste erste und weitere Temperatur bzw. die entsprechende differenzielle Temperatur sowie die Referenztemperatur(en) bzw. differentielle Referenztemperatur ausgewertet werden. Eine Beschädigung von einem Bauteil kann insbesondere durch die Detektierung einer Abweichung zwischen der Referenztemperatur bzw. differentiellen Referenztemperatur und der erfassten ersten und weiteren Temperatur bzw. der differenziellen Temperatur detektiert werden. Eine Beschädigung kann in besonders zuverlässiger Weise detektiert werden.

Die differentielle Referenztemperatur kann zu der entsprechenden differentiellen Temperatur im Wesentlichen zeitparallel sein. Alternativ kann die Referenztemperatur aus einem anderen Zeitraum der gleichen Windkraftanlage (Trend) oder einem anderen vergleichbaren Zeitraum einer vergleichbaren Windkraftanlage stammen.

Darüber hinaus kann gemäß einer weiteren Ausführungsform des Verfahrens das Erfassen einer ersten Temperatur das Erfassen eines ersten (zeitabhängigen) Temperaturverlaufs während einer bestimmten Zeitdauer umfassen. Beispielsweise kann eine (nahezu) kontinuierliche Messung (Überwachung) der ersten Temperatur durchgeführt werden. Vorzugsweise kann die bestimmte Zeitdauer in eine Mehrzahl von Zeitintervallen unterteilt werden. Beispielsweise kann für jedes Zeitintervall (z.B. 10 min, vorzugsweise zumindest 1h, 1 Tag oder 1 Monat) ein Temperaturmittelwert für die während dieses Zeitintervalls beispielsweise (nahezu) kontinuierlich gemessenen ersten Temperaturwerte gebildet (und gespeichert) werden.

Darüber hinaus kann das Erfassen einer weiteren Temperatur das Erfassen eines weiteren (zeitabhängigen) Temperaturverlaufs während einer bestimmten Zeitdauer umfassen. Beispielsweise kann eine (nahezu) kontinuierliche Messung (Überwachung) der weiteren Temperatur durchgeführt werden. Vorzugsweise kann die bestimmte Zeitdauer in eine Mehrzahl von Zeitintervallen unterteilt werden. Beispielsweise kann für jedes Zeitintervall (z.B. 10min, 1h, 1 Tag, 1 Monat) ein Temperaturmittelwert für die während dieses Zeitintervalls beispielsweise (nahezu) kontinuierlich gemessenen weiteren Temperaturwerte gebildet (und gespeichert) werden.

Das Bestimmen einer differentiellen Temperatur kann das Bestimmen eines differentiellen (zeitabhängigen) Temperaturverlaufs durch Bilden der Differenz zwischen dem erfassten ersten Temperaturverlauf und dem erfassten weiteren Temperaturverlauf umfassen. Es versteht sich, dass ein zeitsynchrones Bestimmen des differentiellen Temperaturverlaufs erfolgen kann. Mit anderen Worten wird beispielsweise eine Differenz eines ersten Temperaturmittelwerts eines ersten Zeitintervalls und eines weiteren Temperaturmittelwerts des ersten Zeitintervalls gebildet. Entsprechend kann eine Differenzbildung für die eine vorgebbare Anzahl von weiteren Zeitintervallen durchgeführt werden. Vorzugsweise kann in dieser Ausführungsform die differentielle Referenztemperatur, insbesondere ein differentieller Referenztemperaturverlauf, sein.

Die Belastung eines Bauteils während des Betriebs der Windkraftanlage hängt (direkt oder indirekt) insbesondere mit der erzeugten elektrischen Leistung der Windkraftanlage zusammen. Hierbei ist erkannt worden, dass auch die Temperaturen des ersten und weiteren Bauteils, insbesondere die entsprechende differentielle Temperatur, von der erzeugten elektrischen Leistung abhängt. So kann sich das oben beschrieben Temperaturniveau abhängig von der erzeugten elektrischen Leistung ändern. Anmeldungsgemäß wird daher gemäß einer weiteren Ausführungsform vorgeschlagen, dass das Verfahren umfasst:
- Erfassen der von der Windkraftanlage erzeugten Leistung während der Erfassung des ersten Temperaturverlaufs und des weiteren Temperaturverlaufs,
- wobei in dem Auswerteschritt Temperaturwerte des differentiellen Temperaturverlaufs von mindestens einem vorgebbaren Zeitintervall den zugehörigen Leistungswerten der erzeugten Leistung während dem Zeitintervall zugeordnet werden.

Indem der differentielle Temperaturverlauf abhängig von der jeweils erzeugten Leistung ausgewertet wird, kann die Auswertung weiter verbessert werden. Insbesondere kann die während Erzeugung einer Leistung P(t1) bestimmte differentielle Temperatur T(t1) der differentiellen Temperatur zugeordnet werden. Beispielsweise kann für eine Auswertung die differentielle Temperatur über die erzeugte elektrische Leistung der Windkraftanlage aufgetragen werden. Insbesondere kann der bestimmte Mittelwert einer differentiellen Temperatur eines ersten Zeitintervalls einem gebildeten Mittelwert der erzeugten Leistung des ersten Zeitintervalls zugeordnet werden.

Gemäß einer weiteren bevorzugten Ausführungsform kann in dem Auswerteschritt mindestens ein Temperatur-Extremum (auch operativer Betriebspunkt genannt) aus den Temperaturwerten des differentiellen Temperaturverlaufs bestimmt werden, die den zugehörigen Leistungswerten für das mindestens eine vorgebbare Zeitintervall zugeordnet worden sind. Das Zulässigkeitskriterium kann mindestens ein Referenztemperatur-Extremum einer differentiellen Referenztemperatur von mindestens einer (fehlerfrei arbeiteten) Windkraftanlage sein. Insbesondere durch eine Auswertung des operativen Betriebspunktes kann eine Beschädigung frühzeitig erkannt werden. Die Auswertung kann beispielsweise eine zeitliche Auswertung umfassen und/oder den Vergleich mit zumindest ähnlich gebildeten Windkraftanlagen umfassen.

Vorzugsweise kann in dem Auswerteschritt eine Vielzahl von Temperatur-Extrema von einer entsprechenden Vielzahl von Zeitintervallen ausgewertet werden. Insbesondere kann aus dem zeitlichen Verlauf der Temperatur-Extrema auf eine Beschädigung geschlossen werden. Beispielsweise kann als Zulässigkeitskriterium eine bestimmte zeitabhängige und maximal zulässige Änderung verwendet werden. Insbesondere kann gemäß einer weiteren Ausführungsform vorgesehen sein, dass das Auswerten das Detektieren von Änderungen der Temperatur-Extrema, insbesondere Erhöhungen der Temperatur-Extrema, umfasst. Wird eine derartige Änderung detektiert, ist dies ein besonders zuverlässiger Indikator für eine Beschädigung eines Bauteils. Insbesondere kann hierdurch eine Beschädigung in einem frühen Stadium zuverlässig detektiert werden.

Wie beschrieben wurde, werden zwei Bauteile (ein Bauteilpaar) parallel überwacht. Um festzustellen, welches der zwei belasteten Bauteile tatsächlich eine Beschädigung aufweist, wird gemäß einer weiteren Ausführungsform des anmeldungsgemäßen Verfahrens vorgeschlagen, dass in dem Auswerteschritt bei Detektion einer Beschädigung eines belasteten Bauteils durch Auswerten des Vorzeichens der Änderung der differentiellen Temperatur das belastete Bauteil aus den zwei belasteten Bauteilen identifiziert wird, welches die Beschädigung (tatsächlich) aufweist. So kann beispielsweise eine erhöhte differentielle Temperatur auf eine Beschädigung des ersten Bauteils und eine Reduktion der differentiellen Temperatur auf eine Beschädigung des weiteren Bauteils deuten (oder umgekehrt, je nach Differenzbildung). Insbesondere kann davon ausgegangen werden, dass die gemessene Temperatur eines belasteten Bauteils bei einer Beschädigung steigt.

Gemäß einer besonders bevorzugten Ausführungsform kann das erste und das weitere belastete Bauteil jeweils ein mechanisch belastetes Bauteil sein. Insbesondere kann ein belastetes Bauteil ein Rotorlager, Generatorlager oder Getriebelager sein. Die anmeldungsgemäße thermische Kopplung kann insbesondere aufgrund einer von den zumindest zwei Bauteilen, insbesondere Lager, gemeinsam verwendeten Welle, vorliegen. Zudem können die zwei Bauteile beispielsweise in dem gleichen Gehäuse angeordnet sein.

Alternativ oder zusätzlich kann das erste und das weitere belastete Bauteil jeweils ein elektrisch belastetes Bauteil sein, insbesondere ein Transformator oder Umrichter. Die thermische Kopplung kann insbesondere durch eine im Wesentlichen gleiche elektrische Belastung (z.B. ähnliche elektrische Leistung und/oder Strom und/oder Spannung) bewirkt werden. Auch in diesem Fall können die zwei Bauteile beispielsweise in dem gleichen Gehäuse angeordnet sein. Es versteht sich, dass vorzugsweise eine Mehrzahl von Bauteilpaaren einer Windkraftanlage überwacht wird.

Insbesondere kann anmeldungsgemäß vorgesehen sein, zwei ähnliche belastete Bauteile (mit ähnlicher Umgebungsbedingung (insbesondere zumindest ähnlicher Umgebungstemperatur, z.B. ΔT < 25°, insbesondere ΔT <10°C)) gemeinsam zu überwachen und vorzugsweise deren differentielle Temperatur bzw. deren differentiellen (zeitlichen) Temperaturverlauf auszuwerten. Beispielsweise kann in der Windkraftanlage eine Mehrzahl derartiger Bauteilpaare identifiziert und überwacht werden.

Ein weiterer Aspekt der Anmeldung ist ein Überwachungssystem zum Überwachen des Zustands mindestens eines während des Betriebs einer Windkraftanlage belasteten Bauteils der Windkraftanlage. Das Überwachungssystem umfasst mindestens eine Temperaturerfassungseinrichtung, eingerichtet zum Erfassen einer ersten Temperatur eines ersten belasteten Bauteils der Windkraftanlage. Die Temperaturerfassungseinrichtung ist zum Erfassen mindestens einer weiteren Temperatur eines weiteren belasteten Bauteils der Windkraftanlage eingerichtet. Das erste belastete Bauteil und das weitere belastete Bauteil weisen eine thermische Kopplung miteinander auf. Das Überwachungssystem umfasst mindestens eine Auswerteeinrichtung, eingerichtet zum Detektieren einer Beschädigung von mindestens einem der belasteten Bauteile basierend auf der ersten Temperatur und der weiteren Temperatur und mindestens einem Zulässigkeitskriterium in einem Auswerteschritt.

Das Überwachungssystem kann beispielsweise für eine einzelne Windkraftanlage oder für ein Windenergiesystem bzw. Windpark mit einer Vielzahl von zumindest bauähnlichen Windkraftanlagen verwendet werden. Das Überwachungssystem kann insbesondere gemäß dem oben beschriebenen Verfahren betrieben werden.

Die Temperaturerfassungseinrichtung kann beispielsweise aus verschiedenen Modulen gebildet sein. Die Auswerteeinrichtung kann in der Windkraftanlage oder in einer weiteren Windenergieeinrichtung (z.B. zentraler Steuerrechner, SCADA System beispielsweise einer Kopfstation oder dergleichen) oder in einem Rechenzentrum angeordnet sein. Insbesondere beim zuletzt genannten Fall kann die Auswerteeinrichtung eine zentrale Auswerteeinrichtung sein, die eine Mehrzahl von Windkraftanlagen und deren jeweils belastete Bauteile überwachen kann. Dies ermöglicht, die fehlerfrei arbeiteten Windkraftanlagen als Referenzwindkraftanlagen und damit die Temperaturdaten dieser Referenzwindkraftanlagen als Zulässigkeitskriterium heranzuziehen. Beispielsweise kann für den Datenaustausch zwischen den verschiedenen Einrichtungen ein drahtloses und/oder drahtgebundenen Kommunikationsnetz vorgesehen sein. Hierüber können ebenfalls die oben beschriebenen Alarmnachrichten zumindest teilweise übertragen werden.

Es sei angemerkt, dass vorliegend unter dem Begriff "Leistung" die "Wirkleistung" zu verstehen ist, sofern nichts anderes angegeben ist. Ferner sei angemerkt, dass die Reglereinrichtung den mindestens einen Leistungssollwert basierend auf einer Mehrzahl der zuvor beschriebenen Kriterien bestimmen kann. Darüber hinaus können anmeldungsgemäße Einrichtungen, Module, etc. aus Hardwarekomponenten (z.B. Prozessoren, Schnittstellen, Speichermitteln, etc.) und/oder Softwarekomponenten gebildet sein.

Der Schutzumfang ist durch die Patentansprüche definiert.

Es gibt nun eine Vielzahl von Möglichkeiten, das anmeldungsgemäße Überwachungsverfahren und das anmeldungsgemäße Überwachungssystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Überwachungssystems gemäß der vorliegenden Anmeldung,
- Fig. 2: eine schematische Ansicht eines weiteren Ausführungsbeispiels eines Überwachungssystems gemäß der vorliegenden Anmeldung,
- Fig. 3: ein Diagramm eines Ausführungsbeispiels eines Verfahrens gemäß der vorliegenden Anmeldung,
- Fig. 4: ein Diagramm mit beispielhaften differentiellen Temperaturverläufen gemäß der vorliegenden Anmeldung,
- Fig. 5: ein Diagramm mit einem beispielhaften Verlauf der differentiellen Temperaturwerte abhängig von der erzeugten Leistung gemäß der vorliegenden Anmeldung,
- Fig. 6: ein Diagramm mit beispielhaften Verläufen der differentiellen Temperaturwerte abhängig von der erzeugten Leistung gemäß der vorliegenden Anmeldung, und
- Fig. 7: ein Diagramm mit einem beispielhaften Verlauf der Temperatur-Extrema abhängig von der Zeit.

Nachfolgend werden für gleiche Elemente gleiche Bezugszeichen verwendet.

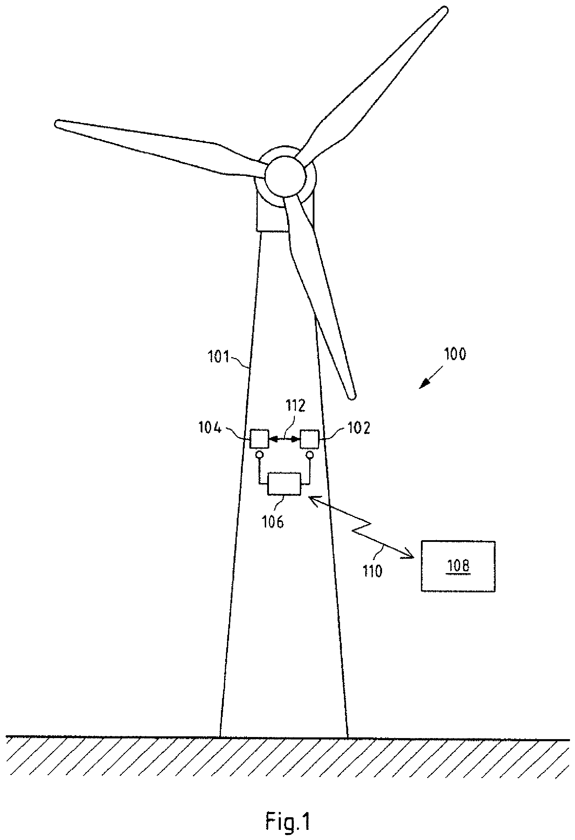

Die Figur 1 zeigt eine schematische Ansicht eines Ausführungsbeispiels eines Überwachungssystems 100, eingerichtet zum Überwachen des Zustands mindestens eines während des Betriebs einer Windkraftanlage 101 belasteten Bauteils 102, 104 der Windkraftanlage 101.

Die Windkraftanlage 101 ist eingerichtet, kinetische Energie des Windes in elektrische Energie zu wandeln. Hierfür ist eine Vielzahl von Bauteilen 102, 104 in der Windkraftanlage 101 angeordnet. Zu Gunsten einer besseren Übersicht sind vorliegend nur zwei Bauteile 102, 104 schematisch dargestellt.

Die Bauteile 102, 104 erfahren während des Betriebs, also insbesondere während der Umwandlung von kinetischer Energie in elektrische Energie, eine mechanische und/oder elektrische Belastung. Hierbei ist die Belastung, welches jedes Bauteil erfährt, (im Wesentlichen) gleich. Insbesondere ist ein erstes belastetes Bauteil 102 und ein weiteres belastetes Bauteile 104 angeordnet. Um eine Beschädigung von mindestens einem der Bauteile 102, 104 frühzeitig zu detektieren, ist eine anmeldungsgemäße gemeinsame Temperaturüberwachung der beiden belasteten Bauteile 102, 104 vorgesehen. Die beiden Bauteile 102, 104 bilden daher vorliegend ein Bauteilpaar.

Wie bereits beschrieben wurde, liegt eine thermische Kopplung 122 zwischen den belasteten Bauteilen 102, 104 aufgrund der im Wesentlichen gleichen Belastung vor. Eine thermische Kopplung meint in dieser Anmeldung allgemein, dass die Temperaturdifferenz im fehlerfreien Betrieb in einem bestimmten Bereich (z.B. ΔT zwischen 0°C und 20°C, vorzugsweise zwischen 0°C und 10°C, besonders bevorzugt zwischen 0°C und 5°C) liegt. Der Bereich kann hierbei von der Art der Belastung abhängen.

Wie zu erkennen ist, umfasst das Überwachungssystem 100 mindestens eine Temperaturerfassungseinrichtung 106. Die Temperaturerfassungseinrichtung 106 ist eingerichtet, eine erste Temperatur des ersten belasteten Bauteils 102 zu erfassen. Ferner ist die Temperaturerfassungseinrichtung 106 vorliegend eingerichtet, eine weitere Temperatur eines weiteren Bauteils 104 zu erfassen. Beispielsweise kann an dem jeweiligen Bauteil 102, 104 und/oder in dem jeweiligen Bauteil 102,104 ein Messfühler angeordnet sein.

Die Temperatureinrichtung 106 kann insbesondere eingerichtet sein, die jeweilige Temperatur (nahezu) kontinuierlich zu bestimmen. Es versteht sich, dass eine geeignete Abtastrate eingesetzt werden kann, um die zu verarbeiteten Temperaturwerte auf eine gewünschte Zahl zu begrenzen. Eine (nahezu) kontinuierliche Erfassung ermöglicht die Erfassung eines (zeitabhängigen) Temperaturverlaufs. Es versteht sich hierbei, dass die Temperatureinrichtung auch aus separaten Elementen bestehen kann.

Die erfassten Temperaturdaten können im vorliegenden Ausführungsbeispiel an eine entfernt angeordnete Auswerteeinrichtung 108 (beispielsweise integriert in einem zentralen Steuerrechner) übertragen werden. Insbesondere ist hierfür ein drahtloses Kommunikationsnetz 110 vorgesehen. Die Temperatureinrichtung 106 und die Auswerteeinrichtung 108 können über geeignete Übertragungsmittel (Sender, Empfänger) verfügen. Es versteht sich, dass gemäß anderen Varianten der Anmeldung die Auswerteeinrichtung auch in der Windkraftanlage integriert sein kann und beispielsweise ein drahtgebundenes Kommunikationsnetz vorgesehen ist.

Die Auswerteeinrichtung 108 ist eingerichtet, eine Beschädigung von mindestens einem der belasteten Bauteile basierend auf der ersten Temperatur und der weiteren Temperatur und mindestens einem Zulässigkeitskriterium in einem Auswerteschritt zu detektieren. Eine nähere Beschreibung der Auswertung erfolgt nachfolgend.

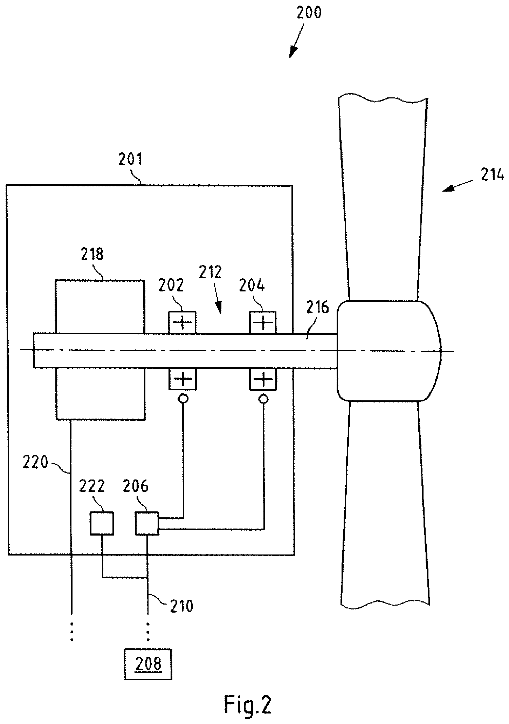

Die Figur 2 zeigt ein weiteres Ausführungsbeispiels eines Überwachungssystems 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten des Überwachungssystems 200 wird insbesondere auf die obigen Ausführungen verwiesen.

Die dargestellte Windkraftanlage 201 weist ein Windrad 214 auf. Das Windrad 214 ist über eine Welle 216 mit einem Generator 218 verbunden. Die Welle 216 ist in Teilen und der Generator 218 ist vollständig innerhalb des Gehäuses einer Gondel der Windkraftanlage 201 eingebaut.

Der in dem Gehäuse geführte Teil der Welle 216 ist über zwei Wälzlager 202, 204, insbesondere ein vorderes und ein hinteres Rollenlager 202, 204, gelagert. Beide Lager befinden sich insbesondere in einem gemeinsamen Gehäuse. In dem Generator 218 wird die aus der Windenergie über das Windrad 214 gewonnene Rotationsenergie in elektrische Energie umgewandelt und, wie schematisch dargestellt, über ein Kabel 220 einem (nicht dargestellten) Umrichter zugeleitet.

Im vorliegenden Ausführungsbeispiel stellen das erste Lager 202 das erste belastete Bauteil 202 und das weitere Lager 204 das weitere belastete Bauteil 204 dar. An jedem der Lager 202, 204 ist jeweils ein Temperatursensor mit einer Temperaturerfassungseinrichtung 206 angeordnet. Die Messwerte der Temperatursensoren werden der Temperaturerfassungseinrichtung 206 bzw. dem Messwertaufnehmer 206 zugeleitet.

Darüber hinaus wird vorliegend von dem Generator 218 oder einer anderen Stelle einer Leistungserfassungseinrichtung 222 Leistungsmesswerte über die von der Windkraftanlage 201 erzeugte Leistung zugeleitet. Insbesondere wird ein (zeitabhängiger) Leistungsverlauf durch die Leistungserfassungseinrichtung 222 erfasst. Neben diesen Parametern kann eine Vielzahl weiterer Erfassungseinrichtungen zur Erfassung weiterer Parameter vorgesehen sein.

Die jeweilige Erfassungseinrichtungen 206, 222 können Daten beispielsweise drahtgebunden über ein Kommunikationsnetz 210 an eine Auswerteeinrichtung 208 eines zentralen Steuerrechners (nicht dargestellt) übertragen. In diesem zentralen Steuerrechner können die Daten in einem SCADA Datensatz gespeichert werden. Das SCADA System speichert beispielsweise für bestimmte Zeitintervalle (Messintervalle), beispielsweise jeweils 10 Minuten, die Mittelwerte der verschiedenen Messwerte, die von der jeweiligen Erfassungseinrichtung 206, 222 übertragen werden.

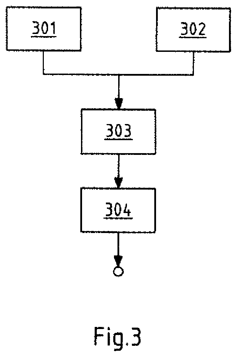

Insbesondere wird vorgeschlagen, dass die ersten und weiteren Temperaturwerte und vorzugsweise die Leistungsdaten ausgewertet werden. Das Verfahren zum Betreiben, insbesondere zum Auswerten der Daten, eines Überwachungssystems gemäß Figur 2 wird mit Hilfe der Figur 3 näher erläutert.

Die Figur 3 zeigt ein Diagramm eines Ausführungsbeispiels eines Verfahrens zum Überwachen des Zustands mindestens eines während des Betriebs einer Windkraftanlage 201 belasteten Bauteils 202, 204 der Windkraftanlage 201 gemäß der vorliegenden Anmeldung.

In einem ersten Schritt 301 wird eine erste Temperatur des ersten belasteten Bauteils, im vorliegenden Beispiel das erste Lager 202 der Windkraftanlage 201, erfasst. Insbesondere kann in oben beschriebener Weise ein erster (zeitabhängiger) Temperaturverlauf erfasst werden, wobei für die verschiedenen Zeitintervalle jeweils Mittelwerte gebildet werden können.

Insbesondere parallel zu Schritt 301 wird in Schritt 302 eine weitere Temperatur des weiteren belasteten Bauteils, im vorliegenden Beispiel das weitere Lager 204 der Windkraftanlage 201, erfasst. Insbesondere kann in oben beschriebener Weise ein weiterer (zeitabhängiger) Temperaturverlauf erfasst werden, wobei für die verschiedenen Zeitintervalle jeweils Mittelwerte gebildet werden können.

Parallel hierzu kann in oben beschriebener Weise in einem (nicht gezeigten) Schritt die Leistung, insbesondere ein (zeitabhängiger) Leistungsverlauf, der von der Windkraftanlage 201 erzeugten Leistung erfasst werden, wobei für die verschiedenen Zeitintervalle jeweils Mittelwerte gebildet werden können.

In einem nächsten Schritt 303 werden zumindest die gemäß den Schritten 301 und 302 erfassten Temperaturdaten ausgewertet, derart, dass eine Beschädigung von einem der Lager 202, 204 detektiert werden kann. Vorzugsweise kann das Detektieren einer Beschädigung von mindestens einem der belasteten Lager 202, 204 basierend auf der ersten Temperatur und der weiteren Temperatur und mindestens einem Zulässigkeitskriterium zunächst das Bestimmen einer differentiellen Temperatur, insbesondere eines differentiellen Temperaturverlaufs, aus den ersten und weiteren Temperaturdaten umfassen. Insbesondere kann die Differenz aus dem ersten Temperaturverlauf des ersten Lagers 202 und des weiteren Temperaturverlaufs des weiteren Lagers bestimmt werden. Beispielsweise können Differenzmittelwerte von den jeweiligen Mittelwerten für jedes Messintervall bzw. Zeitintervall bestimmt werden.

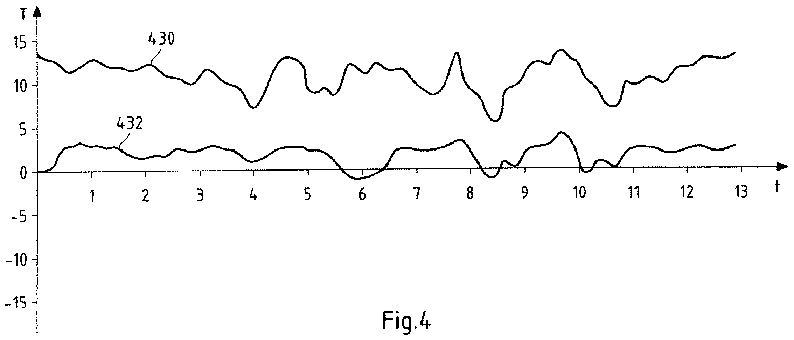

Beispielhafte differentielle Temperaturverläufe 430 und 432 sind in der Figur 4 dargestellt. Während auf der Y-Achse die Temperatur T (z.B. in °C oder K) aufgetragen ist, stellt die X-Achse die Zeitachse t dar (z.B. in Tagen). Wie bereits ausgeführt wurde, sind die beiden Lager 202, 204 auf einer Welle 216 montiert (erfahren also eine im Wesentlichen gleiche Belastung) und befinden sich zudem in der gleichen Umgebung (Gondelgehäuse), so dass in dem vorliegenden Ausführungsbeispiel beide Lager 202, 204 thermisch gekoppelt sind. Wie beschrieben wurde, können durch die Differenzbildung die Temperaturdaten abgeglichen werden, so dass (nahezu) nur noch die Einflüsse aus der Lagerbelastung durch die erzeugte Windkraftanlage-Leistung und die Reibung, die in dem jeweiligen Lager 202, 204 wirkt, übrigbleiben.

Wie beschrieben wurde, ist der Auftrag der differentiellen (Lager-)Temperatur über der Zeitachse in Figur 4 dargestellt, wobei der differentielle Temperaturverlauf 432 fehlerfrei arbeitende Bauteile bzw. eine fehlerfrei arbeitende Windkraftanlage darstellt. Insbesondere verläuft das Temperaturniveau des differentiellen Temperaturverlaufs 432 um 0 (Idealfall). Dieser differentielle Temperaturverlauf 432 kann insbesondere als differentieller Referenztemperaturverlauf einer Referenzwindkraftanlage, also als Zulässigkeitskriterium, herangezogen werden.

Der weiter dargestellte beispielhafte differentielle Temperaturverlauf 430 zeigt einen Verlauf, bei dem ein belastetes Bauteil eine Beschädigung aufweist. Dies ergibt sich dadurch, dass der differentielle Temperaturverlauf 430 im Vergleich zu dem differentiellen Referenztemperaturverlauf 432 ein höheres Temperaturniveau (ca. 12°C) aufweist. In dem Auswerteschritt kann daher ein Vergleich eines bestimmten differentiellen Temperaturverlaufs mit einem differentiellen Referenztemperaturverlauf durchgeführt werden. Übersteigt die Abweichung eine vorgebbare Schwelle, so kann auf eine Beschädigung eines Bauteils geschlossen werden und mit Schritt 304 fortgefahren werden.

In der Praxis können insbesondere eine Vielzahl von zumindest ähnlich gebauten Windkraftanlagen bzw. deren belastete Bauteile (z.B. die oben genannten Lager) überwacht werden. In diesem Fall haben Tests gezeigt, dass eine Beschädigung dadurch erkannt werden kann, dass sich der differentielle Temperaturverlauf mit dem beschädigten Bauteil signifikant von den differentiellen Temperaturverläufen sämtlicher anderer Windkraftanlagen unterscheidet.

Bei einer entsprechenden Detektion kann in Schritt 304 eine Alarmnachricht generiert und beispielsweise an ein Endgerät übertragen werden. Insbesondere der Nutzer des Endgeräts kann anschließend geeignete Maßnahmen beispielsweise zur Behebung der Beschädigung oder für eine weitergehende Prüfung einleiten.

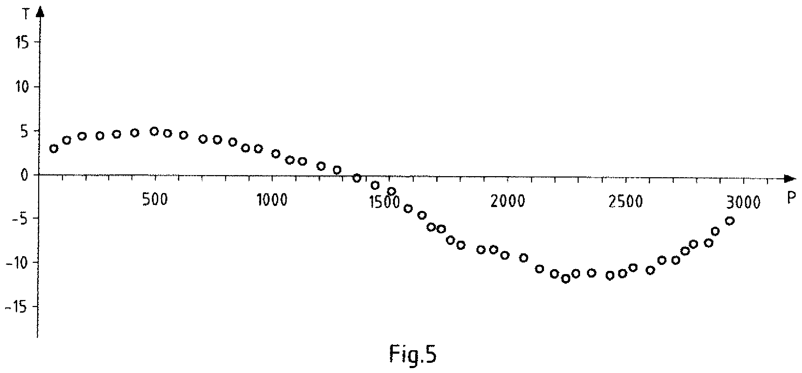

Wie oben bereits beschrieben wurde, kann die differentielle Temperatur von der erzeugten elektrischen Leistung abhängen. Diese Abhängigkeit wird in der Figur 5 dargestellt. Figur 5 zeigt ein Diagramm, bei der die differentiellen Temperaturwerte über die elektrische Leistung der Windkraftanlage aufgetragen sind.

Die beispielhaft dargestellte Kurve in Figur 5 ist insbesondere charakteristisch für eine bestimmte Konfiguration der beiden Lager 202, 204 und den aktuellen Zustand. Die Kurven von Windkraftanlagen mit gleicher Konfiguration weisen daher ähnliche Kurven auf. Daher ist anmeldungsgemäß erkannt worden, dass in einem Auswerteschritt 303 (alternativ oder zusätzlich zur oben beschrieben Auswertung) die Kurve ausgewertet werden kann. Insbesondere kann eine Veränderung dieser Kurve im Zeitverlauf und/oder ein unterschiedlicher Kurvenverlauf von zumindest zwei Windkraftanlagen (nahezu) gleicher Konfiguration als Indikator für eine Beschädigung, wie einer Lagerschädigung, interpretiert werden. Bei einer entsprechenden Detektion kann mit Schritt 304 fortgefahren werden.

Zudem ist erkannt worden, dass bestimmte Punkte der Kurve für eine Auswertung besonders geeignet sind. Insbesondere hat sich der Punkt, in dem die differentielle Temperatur ein Extremum, insbesondere ein Maximum erreicht, als charakteristisch ergeben. Folglich kann alternativ oder zusätzlich zu den zuvor beschriebenen Auswertungsoptionen in dem Auswerteschritt eine Auswertung basierend auf diesem charakteristischen Punkt durchgeführt werden.

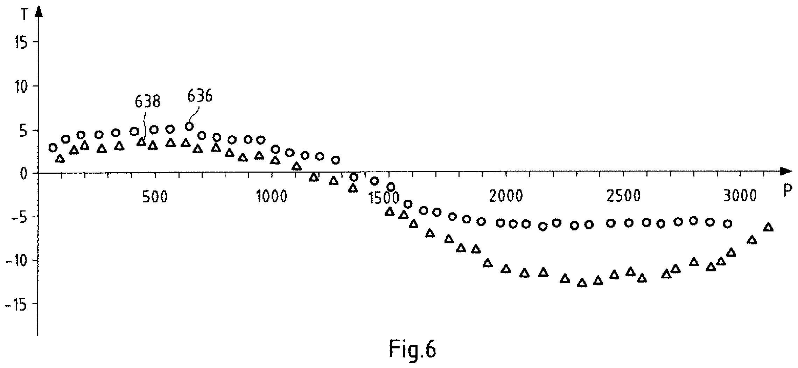

Die Figur 6 zeigt zwei beispielhafte differentielle Temperaturwerte, die über die Leistung aufgetragen wurden. Hierbei resultieren die differentiellen Temperaturwerte von den gleichen Lagern der gleichen Windkraftanlage, die jedoch zu unterschiedlichen Zeitpunkten erfasst wurden. Die aus den zu einem ersten Zeitpunkt (beispielsweise Tag X oder Monat X) erfassten Temperaturdaten der Lager 202, 204 resultierende Kurve (Dreiecke) weist bei einer Leistung von ca. 450 kW ein Temperatur-Extremum 638 auf.

Die aus den zu einem weiteren Zeitpunkt (beispielsweise Tag Y oder Monat Y) erfassten Temperaturdaten der Lager 202, 204 resultierende weitere Kurve (Kreise) weist bei einer Leistung von ca. 650 kW ein Temperatur-Extremum 636 auf. Der weitere Zeitpunkt ist insbesondere ein Zeitpunkt nach dem ersten Zeitpunkt (Y = X +Z).

Wie zu erkennen ist, hat sich das Temperatur-Extremum, auch operativer Betriebspunkt genannt, von dem ersten Zeitpunkt zum zweiten Zeitpunkt verschoben. In dem Auswerteschritt kann ein entsprechender Vergleich (alternativ oder zusätzlich zu den obigen Auswerteoptionen) durchgeführt werden. Beispielsweise kann als Zulässigkeitskriterium eine maximal zulässige Änderung vorgeben sein. Ein Überschreiten dieser Änderung kann in dem Auswerteschritt als Indikator für eine Beschädigung von mindestens einem Lager 202, 204 interpretiert werden. Insbesondere ist eine Änderung des operativen Betriebspunkt (636, 638) ein Hinweis auf Veränderungen in den Reibungsverhältnissen in einem Lager 202, 204 und damit auf eine mögliche Beschädigung eines Lagers 202, 204.

Eine besonders zuverlässige Detektion einer Beschädigung eines belasteten Bauteils kann erreicht werden, wenn in dem Auswerteschritt (alternativ oder zusätzlich) eine Vielzahl von Temperatur-Extrema von einer entsprechenden Vielzahl von Zeitintervallen ausgewertet wird. Das Auswerten kann vorzugsweise das Detektieren von Änderungen der Temperatur-Extrema, insbesondere Erhöhungen der Temperatur-Extrema, umfassen. Mit anderen Worten können eine Bestimmung und ein entsprechender Auftrag der Temperatur-Extrema bzw. der operativen Betriebspunkte über der Zeit zuverlässig mögliche Veränderungen in den belasteten Bauteilen zeigen. Insbesondere ist es durch diese Ausführungsform der anmeldungsgemäßen Auswertung möglich, kleinste Veränderungen in den belasteten und überwachten Bauteilen zuverlässig zu erkennen, so dass eine Beschädigung eines Bauteils in einem frühen Stadium, insbesondere viele Monate vor dem Eintritt eines betriebsgefährdenden Zustands, identifiziert werden kann.

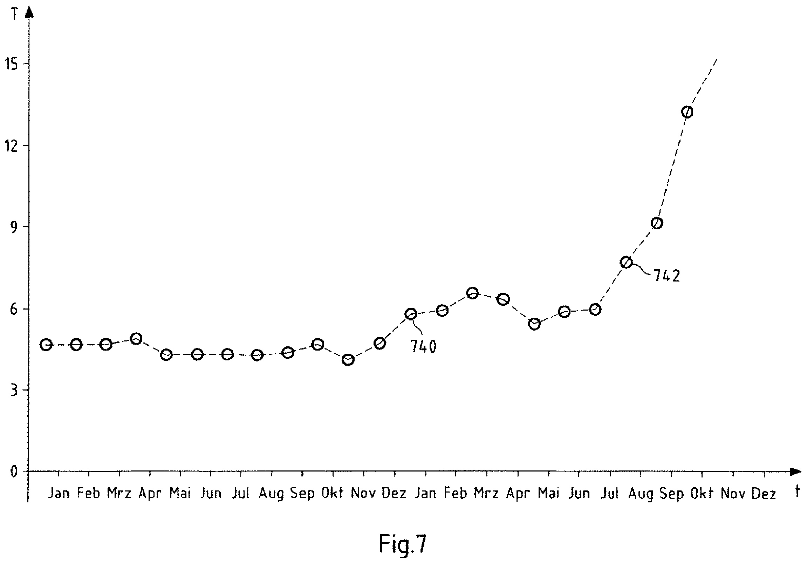

Einen beispielhaften, zeitlichen Verlauf des operativen Betriebspunktes einer Windkraftanlage 201 ist in Figur 7 gezeigt. Wie zu erkennen ist, bleibt in dem Beispiel der operative Betriebspunkt zunächst ca. 12 Monate stabil (bei ca. 4,5 K)). Dies zeigt sich unter anderem in einer geringen Standardabweichung (z.B. 0,2K). Insbesondere kann in einem Auswerteschritt erfasst werden, dass mindestens eine als Zulässigkeitskriterium vorgebbare maximal zulässige Temperaturänderung nicht überschritten wird.

Wie ferner mit dem Bezugszeichen 740 gekennzeichnet ist, kann für den Januar (Jan) eine Überschreitung einer maximal zulässigen Temperaturänderung identifiziert werden. Hierbei kann zusätzlich identifiziert werden, dass die maximal zulässige Temperaturänderung nur um einen geringen Wert überschritten wurde. Beispielsweise können verschieden Zulässigkeitsstufen für eine derartige Detektion vorgegeben werden. Eine entsprechende Detektion ist ein insbesondere zuverlässiger Indikator für eine Änderung eines Lagers 202, 204, insbesondere eine Beschädigung eines Lagers 202, 204, die jedoch (noch) nicht einen betriebsgefährdenden Zustand darstellt, detektiert werden.

Wie beschrieben wurde, kann in Schritt 304 bei einer entsprechenden Detektion eine Alarmmeldung ausgesendet werden. Werden keine Maßnahmen oder keine ausreichenden Maßnahmen für eine Behebung der Beschädigung ergriffen, kann der zeitliche Verlauf des operativen Betriebspunktes wie in Figur 7 beispielhaft dargestellt aussehen. Insbesondere kann sich der operative Betriebspunkt zunächst stabilisieren, bis es bei Bezugszeichen 742 zu einer signifikanten (weiteren) Änderung kommt. Spätestens jetzt sollte ein Austausch des beschädigten Lagers in Erwägung gezogen werden.

Da beide Lager 202, 204 in die Bestimmung der differentiellen Temperatur eingehen, kann in dem Auswerteschritt vorzugsweise erkannt werden, ob das erste Lager 202 oder das weitere Lager 204 einen potentiellen Schaden aufweist. Eine Erhöhung der Temperatur deutet auf eine Beschädigung des weiteren Lagers hin, eine negative differentielle Temperatur auf eine Beschädigung des ersten Lagers. Der anmeldungsgemäße Ansatz erscheint insbesondere vielversprechend für die oben beschriebenen Rotorlager von Windkraftanlagen, kann jedoch auch auf andere Lager, wie z.B. Generatorlager oder Getriebelager, übertragen werden. Entscheidend ist insbesondere, dass eine zweite Messung im Umfeld des Systems durchgeführt werden kann, für die die gleichen thermischen Bedingungen gelten. Ebenso kann der Ansatz von den beschriebenen mechanisch belasteten Bauteilen auch auf elektrisch belastete Bauteile, wie z.B. Transformatoren oder Umrichtern, übertragen werden.

Der große Vorteil des anmeldungsgemäßen Verfahren bzw. Systems ist insbesondere, dass in einer Vielzahl von Windkraftanlagen diese Temperaturdaten oftmals als historische Daten bereits verfügbar sind und daher mit geringem Aufwand durch eine anmeldungsgemäße Auswertung ausgewertet werden können. Damit ist es möglich, ein Monitoring-System aufzubauen, um den Zustand dieser Komponenten/Bauteile zu überwachen und auf Veränderungen schnell reagieren zu können.

## Patentansprüche

1. Verfahren zum Überwachen des Zustands mindestens eines während des Betriebs einer Windkraftanlage (101, 201) belasteten Bauteils (102, 104, 202, 204) der Windkraftanlage (101, 201), umfassend:
- Erfassen einer ersten Temperatur eines ersten belasteten Bauteils (102, 202) der Windkraftanlage (101, 201),
- Erfassen mindestens einer weiteren Temperatur eines weiteren belasteten Bauteils (104, 204) der Windkraftanlage (101, 201), und
- Detektieren einer Beschädigung von mindestens einem der belasteten Bauteile (102, 104, 202, 204) basierend auf der erfassten ersten Temperatur und der erfassten weiteren Temperatur und mindestens einem Zulässigkeitskriterium in einem. Auswerteschritt,
**dadurch gekennzeichnet, dass** das erste belastete Bauteil (102, 202) und das weitere belastete Bauteil (104, 204) eine thermische Kopplung (112, 212) miteinander aufweisen, wobei eine thermische Kopplung vorliegt, wenn das erste Bauteil (102, 202) und das zweite Bauteil (104, 204) eine zumindest ähnliche mechanische und/oder elektrische Belastung erfahren.

2. Verfahren nach Anspruch 1, **dadurch gekennzeichnet, dass** das Verfahren umfasst:
- Bestimmen einer differentiellen Temperatur durch Bilden der Differenz zwischen der erfassten ersten Temperatur und der erfassten weiteren Temperatur,
- wobei in dem Auswerteschritt eine Beschädigung von mindestens einem der belasteten Bauteile (102, 104, 202, 204) basierend auf der gebildeten differentiellen Temperatur und dem mindestens einen Zulässigkeitskriterium detektiert wird.

3. Verfahren nach einem der vorherigen Ansprüche, **dadurch gekennzeichnet, dass** das mindestens eine Zulässigkeitskriterium mindestens eine Referenztemperatur, insbesondere eine differentielle Referenztemperatur, von mindestens einer Referenzwindkraftanlage umfasst.

4. Verfahren nach Anspruch 2 oder 3, **dadurch gekennzeichnet, dass**
- das Erfassen einer ersten Temperatur das Erfassen eines ersten Temperaturverlaufs während einer bestimmten Zeitdauer umfasst,
- das Erfassen einer weiteren Temperatur das Erfassen eines weiteren Temperaturverlaufs während einer bestimmten Zeitdauer umfasst, und
- das Bestimmen einer differentiellen Temperatur das Bestimmen eines differentiellen Temperaturverlaufs durch Bilden der Differenz zwischen dem erfassten ersten Temperaturverlauf und dem erfassten weiteren Temperaturverlauf umfasst.

5. Verfahren nach Anspruch 4, **dadurch gekennzeichnet, dass** das Verfahren umfasst:
- Erfassen der von der Windkraftanlage (101, 201) erzeugten Leistung während der Erfassung des ersten Temperaturverlaufs und des weiteren Temperaturverlaufs,
- wobei in dem Auswerteschritt Temperaturwerte des differentiellen Temperaturverlaufs von mindestens einem vorgebbaren Zeitintervall den zugehörigen Leistungswerten der erzeugten Leistung während dem Zeitintervall zugeordnet werden.

6. Verfahren nach Anspruch 5, **dadurch gekennzeichnet, dass**
- in dem Auswerteschritt mindestens ein Temperatur-Extremum aus den Temperaturwerten bestimmt wird, die den zugehörigen Leistungswerten zugeordnet sind für das mindestens eine vorgebbare Zeitintervall, und
- das Zulässigkeitskriterium mindestens ein Referenztemperatur-Extremum einer differentiellen Referenztemperatur von mindestens einer Referenzwindkraftanlage ist.

7. Verfahren nach Anspruch 6, **dadurch gekennzeichnet, dass**
- in dem Auswerteschritt eine Vielzahl von Temperatur-Extrema von einer entsprechenden Vielzahl von Zeitintervallen ausgewertet wird,
- wobei das Auswerten insbesondere das Detektieren von Änderungen der Temperatur-Extrema, insbesondere Erhöhungen der Temperatur-Extrema, umfasst.

8. Verfahren nach einem der vorherigen Ansprüche 2 bis 7, **dadurch gekennzeichnet, dass** in dem Auswerteschritt bei Detektion einer Beschädigung eines belasteten Bauteils (102, 104, 202, 204) durch Auswerten des Vorzeichens der Änderung der differentiellen Temperatur das belastete Bauteil (102, 104, 202, 204) aus den zwei belasteten Bauteilen (102, 104, 202, 204) identifiziert wird, welches die Beschädigung aufweist.

9. Verfahren nach einem der vorherigen Ansprüche, **dadurch gekennzeichnet, dass**
- das erste und das weitere belastete Bauteil (102, 104, 202, 204) jeweils ein mechanisch belastetes Bauteil (102, 104, 202, 204) ist, insbesondere ein Rotorlager, Generatorlager oder Getriebelager,
und/oder
- das erste und das weitere belastete Bauteil (102, 104, 202, 204) jeweils ein elektrisch belastetes Bauteil ist, insbesondere ein Transformator oder Umrichter.

10. Überwachungssystem (100, 200) zum Überwachen des Zustands mindestens eines während des Betriebs einer Windkraftanlage (101, 201) belasteten Bauteils (102, 104, 202, 204) der Windkraftanlage (101, 201), umfassend:
- mindestens eine Temperaturerfassungseinrichtung (106, 206), eingerichtet zum Erfassen einer ersten Temperatur eines ersten belasteten Bauteils (102, 202) der Windkraftanlage (101, 202), wobei
- die Temperaturerfassungseinrichtung (106, 206) zum Erfassen mindestens einer weiteren Temperatur eines weiteren belasteten Bauteils (104, 204) der Windkraftanlage (101, 201) eingerichtet ist, und
- das Überwachungssystem (100, 200) mindestens eine Auswerteeinrichtung (108, 208) umfasst, eingerichtet zum Detektieren einer Beschädigung von mindestens einem der belasteten Bauteile (102, 104, 202, 204) basierend auf der ersten Temperatur und der weiteren Temperatur und mindestens einem Zulässigkeitskriterium in einem. Auswerteschritt,
**dadurch gekennzeichnet, dass** das erste belastete Bauteil (102, 202) und das weitere belastete Bauteil (104, 204) eine thermische Kopplung (112, 212) miteinander aufweisen, wobei eine thermische Kopplung vorliegt, wenn das erste Bauteil (102, 202) und das zweite Bauteil (104, 204) eine zumindest ähnliche mechanische und/oder elektrische Belastung erfahren.

## Claims

1. A method of monitoring the condition of at least one component (102, 104, 202, 204) of a wind turbine (101, 201) stressed during operation of the wind turbine (101, 201), comprising:
- sensing a first temperature of a first stressed component (102, 202) of the wind turbine (101, 201),
- sensing at least one further temperature of a further stressed component (104, 204) of the wind turbine (101, 201),
- detecting a damage of at least one of the stressed components (102, 104, 202, 204) based on the sensed first temperature and the sensed further temperature and at least one allowance criterion in an evaluation step,
**characterized in that**
- the first stressed component (102, 202) and the further stressed component (104, 204) have a thermal coupling (112, 212) to each other, wherein a thermal coupling exists when the first component (102, 202) and the second component (104, 204) experience at least a similar mechanical and/or electrical stress.

2. The method according to claim 1, **characterized in that** the method comprises
- determining a differential temperature by forming the difference between the sensed first temperature and the sensed further temperature,
- wherein in the evaluation step, a damage of at least one of the stressed components (102, 104, 202, 204) is detected based on the formed differential temperature and the at least one allowance criterion.

3. The method according to any of the preceding claims, **characterized in that** the at least one admissibility criterion comprises at least one reference temperature, in particular, a differential reference temperature, of at least one reference wind turbine.

4. The method according to claim 2 or 3, **characterized in that**
- the sensing of a first temperature comprises the sensing of a first temperature profile during a specific period of time,
- sensing a further temperature comprises sensing a further temperature profile during a specific period of time, and
- determining a differential temperature comprises determining a differential temperature profile by forming the difference between the sensed first temperature profile and the sensed further temperature profile.

5. The method according to claim 4, **characterized in that** the method comprises:
- sensing the power generated by the wind turbine (101, 201) during the sensing of the first temperature profile and the further temperature profile,
- wherein in the evaluation step temperature values of the differential temperature profile of at least one predeterminable time interval are assigned to the associated power values of the generated power during the time interval.

6. The method according to claim 5, **characterized in that**
- in the evaluation step, at least one temperature extremum is determined from the temperature values which are assigned to the associated power values for the at least one predeterminable time interval, and
- the admissibility criterion is at least one reference temperature extremum of a differential reference temperature of at least one reference wind turbine.

7. The method according to claim 6, **characterized in that**
- in the evaluation step, a plurality of temperature extremes of a corresponding plurality of time intervals is evaluated,
- wherein the evaluating comprises, in particular, a detecting of changes in the temperature extremes, in particular, increases in the temperature extremes.

8. The method according to any one of the preceding claims 2 to 7, **characterized in that** in the evaluation step, upon a detection of a damage of a stressed component (102, 104, 202, 204), the stressed component (102, 104, 202, 204) among the two stressed components (102, 104, 202, 204) having the damage is identified by evaluating the sign of the change of differential temperature.

9. The method according to any one of the preceding claims, **characterized in that**
- the first and the further stressed component (102, 104, 202, 204) are in each case a mechanically stressed component (102, 104, 202, 204), in particular, a rotor bearing, a generator bearing or a transmission bearing,
and/or
- the first and the further stressed component (102, 104, 202, 204) are in each case an electrically stressed component, in particular, a transformer or a converter.

10. A monitoring system (100, 200) for monitoring the condition of at least one component (102, 104, 202, 204) of the wind turbine (101, 201) stressed during operation of the wind turbine (101, 201), comprising:
- at least one temperature sensing device (106, 206) configured to sense a first temperature of a first stressed component (102, 202) of the wind turbine (101, 202),
- wherein the temperature sensing device (106, 206) is configured to sense at least one further temperature of a further stressed component (104, 204) of the wind turbine (101, 201),
- wherein the monitoring system (100, 200) comprises at least one evaluation device, configured to detect a damage of at least one of the stressed components (102, 104, 202, 204) based on the sensed first temperature and the sensed further temperature and at least one allowance criterion in an evaluation step **characterized in that**
- the first stressed component (102, 202) and the further stressed component (104, 204) have a thermal coupling (112, 212) to each other, wherein a thermal coupling exists when the first component (102, 202) and the second component (104, 204) experience at least a similar mechanical and/or electrical stress.

## Revendications

1. Procédé pour surveiller l'état d'au moins un élément (102, 104, 202, 204) d'éolienne (101, 201) qui est sollicité pendant le fonctionnement de l'éolienne (101, 201), comprenant :
- Détecter une première température d'un premier élément sollicité (102, 202) de l'éolienne (101, 201),
- détecter au moins une température supplémentaire d'un élément sollicité supplémentaire (104, 204) de l'éolienne (101, 201), et
- détecter un endommagement d'au moins un des éléments sollicités (102, 104, 202, 204) sur la base de la première température détectée et de la température supplémentaire détectée et d'au moins un critère d'admissibilité dans une étape d'évaluation,
**caractérisé**
- **en ce que** le premier élément sollicité (102, 202) et l'élément sollicité supplémentaire (104, 204) ont un couplage thermique (112, 212) entre eux,
- où un couplage thermique est présent lorsque le premier élément (102, 202) et le second élément (104, 204) subissent au moins une sollicitation mécanique et/ou électrique similaire.

2. Procédé selon la revendication 1, **caractérisé en ce que** le procédé comprend :
- déterminer une température différentielle en formant la différence entre la première température détectée et la température supplémentaire détectée,
- où, lors de l'étape d'évaluation, un endommagement d'au moins un des éléments sollicités (102, 104, 202, 204) basé sur la température différentielle formée et l'au moins un critère d'autorisation est détecté.

3. Procédé selon l'une des revendications précédentes, **caractérisé en ce que** l'au moins un critère d'admissibilité comprend au moins une température de référence, en particulier une température de référence différentielle, d'au moins une éolienne de référence.

4. Procédé selon la revendication 2 ou 3, **caractérisé en ce que**
- la détection d'une première température comprend la détection d'un premier profil de température pendant une période de temps déterminée,
- la détection d'une température supplémentaire comprend la détection d'un profil de température supplémentaire pendant une période de temps déterminée, et
- la détermination d'une température différentielle comprend la détermination d'un profil de température différentielle en formant la différence entre le premier profil de température détecté et le profil de température supplémentaire détecté.

5. Procédé selon la revendication 4, **caractérisé en ce que** le procédé comprend :
- détecter la puissance générée par l'éolienne (101, 201) pendant la détection du premier profil de température et du profil de température supplémentaire,
- où, dans l'étape d'évaluation, des valeurs de température du profil de température différentiel d'au moins un intervalle de temps prédéterminable sont associées aux valeurs de puissance respectives de la puissance générée pendant l'intervalle de temps.

6. Procédé selon la revendication 5, **caractérisé en ce que**
- dans l'étape d'évaluation, au moins un extrême de température est déterminé à partir des valeurs de température, lesquelles valeurs de température sont associées aux valeurs de puissance respectives pour l'au moins un intervalle de temps prédéterminable, et
- le critère d'admissibilité est au moins un extrême de température de référence d'une température de référence différentielle d'au moins une éolienne de référence.

7. Procédé selon la revendication 6, **caractérisé en ce que**,
- dans l'étape d'évaluation une pluralité d'extrêmes de température d'une pluralité correspondante d'intervalles de temps est évaluée,
- où ladite évaluation comprend en particulier la détection de changements desdits extrêmes de température, en particulier des augmentations desdits extrêmes de température.

8. Procédé selon l'une quelconque des revendications 2 à 7 précédentes, **caractérisé en ce que**, dans l'étape d'évaluation, lorsqu'un endommagement d'un élément sollicité (102, 104, 202, 204) est détecté, l'élément sollicité (102, 104, 202, 204) ayant l'endommagement est identifié parmi les deux éléments sollicités (102, 104, 202, 204) en évaluant le signe du changement de la température différentielle.

9. Procédé selon l'une des revendications précédentes, **caractérisé en ce que**
- le premier élément sollicité et l'élément sollicité supplémentaire (102, 104, 202, 204) sont chacun un élément sollicité mécaniquement (102, 104, 202, 204), en particulier un palier de rotor, un palier de générateur ou un palier de transmission,
et / ou
- le premier élément sollicité et l'élément sollicité supplémentaire (102, 104, 202, 204) sont chacun un élément sollicité électriquement, en particulier un transformateur ou un onduleur.

10. Système de surveillance (100, 200) pour surveiller l'état d'au moins un élément (102, 104, 202, 204) d'éolienne (101, 201) qui est sollicité pendant le fonctionnement de l'éolienne (101, 201), comprenant :
- au moins un dispositif de détection de température (106, 206) agencé pour détecter une première température d'un premier élément sollicité (102, 202) de l'éolienne (101, 202),
- où le dispositif de détection de la température (106, 206) est conçu pour détecter au moins une température supplémentaire d'un élément sollicité supplémentaire (104, 204) de l'éolienne (101, 201), et
- où le système de surveillance (100, 200) comprend au moins un dispositif d'évaluation (108, 208), conçu pour détecter un endommagement d'au moins un des éléments sollicités (102, 104, 202, 204) sur la base de la première température et de la température supplémentaire et d'au moins un critère de recevabilité dans une étape d'évaluation,
**caractérisé**
- **en ce que** le premier élément sollicité (102, 202) et l'élément sollicité supplémentaire (104, 204) ont un couplage thermique (112, 212) entre eux,
- où un couplage thermique est présent lorsque le premier élément (102, 202) et le second élément (104, 204) subissent au moins une sollicitation mécanique et/ou électrique similaire.
